# EUROPÄISCHE PATENTSCHRIFT

(11) **EP 2 212 979 B1**
(45) Veröffentlichungstag und Bekanntmachung des Hinweises auf die Patenterteilung: **17.02.2016**
(21) Anmeldenummer: 08852714.8
(22) Anmeldetag: 20.11.2008
(51) Int. Cl.: H02H 7/08, B25F 5/00

(54) **ELEKTROHANDWERKZEUG**
ELECTRIC HAND TOOL
OUTIL ÉLECTRIQUE À MAIN

(30) Priorität: 23.11.2007 DE 102007056446; 23.11.2007 DE 102007056445
(43) Veröffentlichungstag der Anmeldung: 04.08.2010
(73) Patentinhaber: Marquardt GmbH, 78604 Rietheim-Weilheim (DE)
(72) Erfinder: MÜLLER, Jens, 78532 Tuttlingen (DE); TRÖNDLE, Michael, 79774 Albbruck-Birndorf (DE); KESSINGER, Ralf, 78259 Mühlhausen-Ehingen (DE)
(74) Vertreter: Otten, Roth, Dobler & Partner mbB Patentanwälte
(86) Internationale Anmeldenummer: PCT/DE2008/001920
(87) Internationale Veröffentlichungsnummer: WO 2009/065390

(56) Entgegenhaltungen:
- DE-A1- 3 144 742
- US-A- 4 764 745

## Beschreibung

Die Erfindung betrifft ein Elektrowerkzeug nach dem Oberbegriff des Patentanspruchs 1.

Bei dem Elektrowerkzeug handelt es sich vor allem um ein Elektrohandwerkzeug mit einem Elektromotor, wie um ein Akku- und/oder ein Netz-Elektrowerkzeug. Beispielsweise kann es sich bei diesen Elektrowerkzeugen um Bohrmaschinen, Schleifer, Sägen, Hobel, Winkelschleifer o. dgl. handeln.

Elektrowerkzeuge gemäß der DE 31 44 742 A1 weisen einen Schalter mit einer Schaltungsanordnung zum Ein- und/oder Ausschalten der elektrischen Spannungszuführung zum Elektromotor auf. Bei der Schaltungsanordnung kann es sich um ein Kontaktsystem handeln, das einen Festkontakt und einen damit zusammenwirkenden Schaltkontakt umfaßt. Ebensogut kann es sich bei der Schaltungsanordnung um eine Elektronik handeln, die einen zwischen einem sperrenden sowie einem leitenden Zustand umschaltbaren Leistungshalbleiter umfaßt. Der Schalter besitzt ein vom Benutzer manuell bewegbares Betätigungsorgan zur schaltenden Einwirkung auf die Schaltungsanordnung.

Der Trend von Elektrowerkzeugen zeigt eine stetige Erhöhung der Leistungsparameter des Gesamtsystems. Besonders bei mit Gleichspannung betriebenen Elektrowerkzeugen werden Batterien mit immer effizienteren Technologien, mit gesteigerten Kapazitäten verbunden mit einer höheren Hochstromfestigkeit und mit einer erheblich erhöhten Anzahl von Lade- sowie Endladezyklen eingesetzt. In Verbindung mit leistungsstärkeren Motoren, deren Innenwiderstände reduziert werden, führt das zu einer erheblich stärkeren elektrischen Belastung der Komponenten. Dies wiederum kann bei einer Störung zu erheblichen Risiken führen, insbesondere im "worst case"-Fall, zu einem elektrischen Kurzschluß im System, bei dem im ungünstigsten Fall ein sehr hoher Kurzschlußstrom von bis zu 200 A oder auch mehr fließen kann. Dieser Kurzschlußstrom stellt eine sicherheitsrelevante Gefährdung dar, und zwar beginnend mit einer unzulässigen Erwärmung von Leitungen und Anschlüssen bis zur starken Überhitzung des Motors oder des Akkus und deren mögliche "Inbrandsetzung". Elektrische Kurzschlüsse werden im allgemeinen durch eine Fehlfunktion eines Systembestandteiles hervorgerufen, was wiederum Folge von unsachgemäßem Gebrauch oder auch schlicht von Erreichen des Lebensdauerendes für das System sein kann. Verschmorte Isolationen im Motor oder den Zuleitungen, defekte Elektroniken in der Griffschale oder im Schalter mit durchlegierten Leistungshalbleitern oder verschweißte Schaltkontakte könnten Beispiele für Ursachen für einen möglichen Systemkurzschluß sowie daraus resultierende Folgen sein. Oberstes Ziel der Geräte- und Komponentenhersteller ist es zwar, durch hohe Robustheit aller Komponenten ein solches Szenario zu vermeiden, aber vollständig läßt sich das Risiko bisher nicht ausschließen.

Der Erfindung liegt die Aufgabe zugrunde, den Schalter und/oder die Schaltungsanordnung derart weiterzuentwickeln, daß die Auswirkungen einer solchen Fehlfunktion minimiert sind. Vor allem soll eine sicherheitsrelevante Gefährdung des Benutzers ausgeschlossen sein.

Diese Aufgabe wird bei einem gattungsgemäßen Elektrowerkzeug durch die kennzeichnenden Merkmale des Anspruchs 1 gelöst.

Beim erfindungsgemäßen Schalter kann die Schaltungsanordnung eine Sicherung in der Art einer Hochstromsicherung aufweisen, derart daß beim Auftreten eines Kurzschlußstroms die elektrische Spannungszuführung zum Elektromotor unabhängig vom Betätigungsorgan unterbrochen wird. Lösungsansatz ist also die Verwendung einer Hochstromsicherung im Elektrowerkzeugschalter. Die Hochstromsicherung reagiert beim Auftreten eines hohen Kurzschlußstromes und unterbricht in diesem Fall den Stromkreis.

Im Fehlerfalle der Schaltungsanordnung kann die elektrische Spannungszuführung von einer Überstromeinrichtung unterbrochen werden. Dient ausschließlich ein Leistungshalbleiter, beispielsweise ein MosFET, als ansteuerbares elektronisches Schaltelement, so ist ein Ausschalten des Elektrowerkzeugs dann nicht mehr möglich, wenn der Leistungshalbleiter durchlegiert ist. Mit Hilfe der Erfindung wird diese Gefahr dadurch beseitigt, indem in diesem Fall die Überstromeinrichtung die Spannungszuführung unterbricht.

In üblicher Weise kann der Schalter und zwar insbesondere der Elektrowerkzeugschalter ein Gehäuse besitzen. Die Sicherung läßt sich in kompakter Anordnung im Gehäuse des Schalters anordnen. In kompakter Ausgestaltung kann auch die erfindungsgemäße Schaltungsanordnung direkt im Gehäuse des Schalters und zwar insbesondere des Elektrowerkzeugschalters aufgenommen sein. Es ist dann ein vollelektronischer Gleichstrom(DC)-Elektrowerkzeugschalter mit sicherer Abschaltung geschaffen. Dies ist mit geringerem Aufwand wie bei bisherigen Elektrowerkzeugschaltern möglich.

Weitere Ausgestaltungen der Erfindung sind Gegenstand der Unteransprüche. Das als Hochstromsicherung dienende Sicherungselement und/oder die Überstromeinrichtung kann dabei wie nachfolgend dargestellt näher ausgeführt sein.

Bei vorhandenem mechanischen Hauptkontakt kann eine mechanische Zwangsöffnung im Moment des Kurzschlußstromes den Hauptkontakt öffnen, unabhängig vom Betätigungsorgan bzw. vom Schalterbetätigungselement. Diese Zwangsöffnung kann als Bi-Metall-Bauelement ausgeführt werden, das eventuell vorgespannt ist, so daß bei hohem Kurzschlußstrom und der dadurch folgenden starken Erwärmung des Bi-Metall-Bauteiles eine schnappende Öffnung des Kontaktes erfolgt.

Bei vorhandenem oder fehlendem mechanischen Hauptkontakt kann ein weiterer mechanischer Kontakt, der bei "Normalbetrieb" keine Funktion besitzt, als Kurschluß-Öffner fungieren.

Bei vorhandenem oder fehlendem mechanischen Hauptkontakt kann ein elektrisches Bauelement den Stromkreis in Reihe zum mechanischen Hauptkontakt öffnen. Bei Systemen ohne mechanischen Kontakt läßt sich der Stromkreis durch eine entsprechende Elektronik öffnen. Beispielsweise wird ein MOSFET hierzu auf "Sperren" geschaltet.

Ein metallenes, als elektrischer Leiter fungierendes Element im Schalter, was gegebenenfalls auch auf einer Leiterplatte aufgebracht werden kann, wird infolge des hohen Kurzschlußstromes in seiner Form verändert. Dadurch wird von diesem metallenen Element eine Kontaktstelle geöffnet. Bei dem metallenen Element kann es sich um ein Bi-Metall oder um einen Bi-Werkstoff in Verbindung mit der Leiterplatte handeln.

Ein metallenes, als elektrischer Leiter fungierendes und unter mechanischer Spannung stehendes Element im Schalter, was eventuell auch auf einer Leiterplatte aufgebracht werden kann, wird infolge des hohen Kurzschlußstromes partiell zerstört. Dadurch öffnet dieses Element durch die nun freiwerdende mechanische Spannung den Stromkreis. Das metallene Element kann unter einer Biege- und/oder Verdrehspannung stehen.

Eine handelsübliche Schmelzsicherung ist im Schalter im Stromkreis positioniert und unterbricht den Kurzschlußstrom.

Der Kurzschlußstrom kann auch in einem elektronischen Stromkreis detektiert werden. Beispielsweise kann hierzu eine Strommessung über einen Shunt-Widerstand und/oder auch indirekt über eine Temperaturmessung, beispielsweise mittels eines NTC-Widerstandes erfolgen. Der Stromkreis wird dann elektronisch unterbrochen, beispielsweise durch Öffnen eines Leistungshalbleiters.

Generell kann die Unterbrechung des Kurzschlußstromkreises irreparabel funktionieren, da im allgemeinen der Defekt als Kurzschlußursache weiter besteht. Resultat ist dann das Nichtfunktionieren des Elektrowerkzeuges. Gegebenenfalls kann die Unterbrechung des Stromkreises nach außen hin, zumindest für den Service, erkennbar ausgestaltet sein, was eine Fehlerindikation erheblich vereinfacht.

In weiterer Ausgestaltung bietet es sich an, daß ein mittels des Betätigungsorgans betätigbarer Bremskontakt zur Kurzschlußbremsung des Elektromotors dem Elektromotor in der Spannungszuführung parallel geschaltet ist. Der Bremskontakt ist bei eingeschaltetem ansteuerbaren elektronischen Schaltelement, das eine Elektronik sowie einen Leistungshalbleiter umfaßt, geöffnet und bei ausgeschaltetem elektronischen Schaltelement geschlossen. Mit Hilfe des Bremskontaktes sowie der Überstromtrenneinrichtung wird ein sicheres Abschalten auch bei defektem Leistungshalbleiter, insbesondere einem dauerhaft leitendem MosFET, gewährleistet.

In einfacher Ausgestaltung ist die Überstromeinrichtung als dünne Leiterbahn ausgebildet, derart daß die Leiterbahn bei einem Überstrom zerstört wird. Dies kann beispielsweise mittels eines über den Bremskontakt fließenden Kurzschlußstroms geschehen, der zum Verdampfen der Leiterbahn führt. Dadurch wird die Spannungszuführung zum Elektromotor dauerhaft getrennt, womit der Gefahr einer Gefährdung des Benutzers wirksam begegnet ist. Zweckmäßigerweise ist die die Überstromeinrichtung bildende Leiterbahn auf einer die Elektronik aufnehmenden Leiterplatte angeordnet.

Die mit der Erfindung erzielten Vorteile bestehen insbesondere darin, daß der Schalter nicht nur zum Schließen und Variieren des Stromkreises von der Batterie zum Elektromotor fungiert, sondern vielmehr auch als Sicherungselement dient. Bei den stetig steigenden Leistungsdaten der Elektrowerkzeuge kann der Schalter ein kritisches Element im Gesamtsystem sein. Mit Hilfe der Erfindung wird die sicherheitsrelevante Gefahr von Kurzschlußströmen gebannt. Dies ist besonders im Hinblick auf voll-elektronische Schalter, die ohne einen mechanischen Kontakt arbeiten, elementar wichtig. Die Erfindung bietet somit einen Zugewinn an Sicherheit.

Die mit der Erfindung erzielten weiteren Vorteile bestehen insbesondere darin, daß kein Kontaktverschleiß sowie kein Kontaktprellen beim Ein- und/oder Ausschalten des Elektrowerkzeugs eintritt. Es ist ein Failsave für das Elektrowerkzeug durch den Bremskontakt und die Überstromtrennung realisiert. Bei einem defekten MosFET, der dann leitend ist, wird beim Abschalten durch den schließenden Bremskontakt ein Überstrom erzeugt. Dieser Überstrom löst dann die Überstromtrennung aus und unterbricht den Stromkreis. Außerdem tritt kein Kontaktteasen durch die Schwingbelastung im Schlagbohrbetrieb auf.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: schematisch einen elektrischen Schalter für ein Elektrowerkzeug,
- Fig. 2: schematisch eine Schaltungsanordnung für das Elektrowerkzeug und
- Fig. 3: das Elektrowerkzeug in einer Prinzipdarstellung.

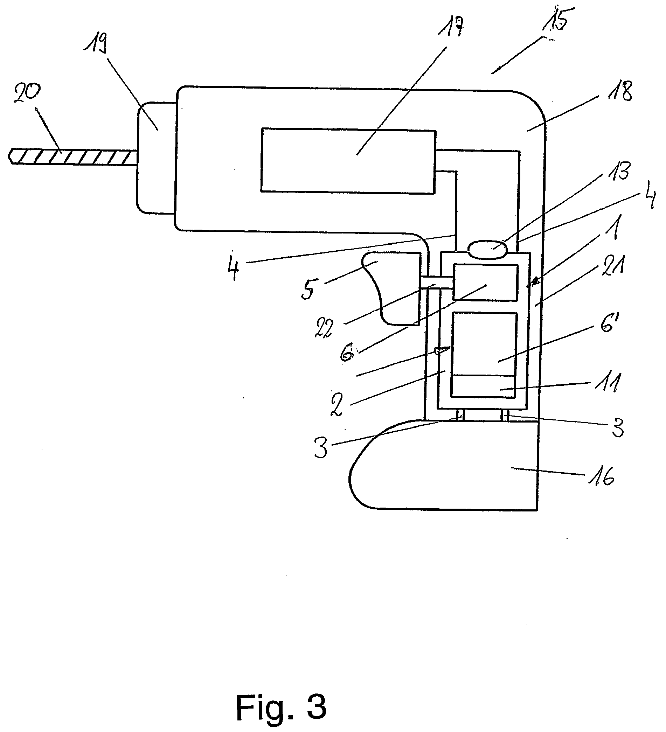

In Fig. 3 ist ein Elektrowerkzeug 15 zu sehen, das ein Gehäuse 18 sowie einen im Gehäuse 18 befindlichen, von einer durch einen Akku gebildeten elektrischen Spannungsquelle 16 versorgten Elektromotor 17 aufweist. Ein in einer Werkzeugaufnahme 19 befindliches Werkzeug 20, beispielsweise ein Bohrer, wird vom Elektromotor 17 angetrieben. Je nach Art der Spannungsquelle handelt es sich um ein Akku- und/oder ein Netz-Elektrowerkzeug. Bei dem Elektrowerkzeug kann es sich beispielsweise um eine Bohrmaschine, einen Schleifer, eine Säge, einen Hobel, einen Winkelschleifer o. dgl. handeln.

Im Handgriff 21 des Gehäuses 18 befindet sich ein Schalter 1 für das Elektrowerkzeug 15, mit dessen Hilfe der Benutzer das Elektrowerkzeug 15 bedienen kann. Der Schalter 1 besitzt ein eigenes Gehäuse 2, an dem sich elektrische Eingänge 3 zum Anschluß an die Spannungquelle sowie elektrische Ausgänge 4 für den Anschluß des Elektromotors 17 befinden. Am Gehäuse 2 ist ein vom Benutzer manuell bewegbares Betätigungsorgan 5 beweglich gelagert, mit dessen Hilfe über einen Stößel 22 auf ein im Gehäuse 2 befindliches Schaltelement 6 und/oder eine Schaltungsanordnung 6' in der Art eines elektronischen Schaltelements schaltend eingewirkt werden kann. Das Schaltelement 6 und/oder die Schaltungsanordnung 6' dienen wiederum zum Ein- und/oder Ausschalten der elektrischen Spannungszuführung zum Elektromotor 17 sowie gegebenenfalls zum Betrieb des Elektromotors 17 mit einer über das Betätigungsorgan 5 vom Benutzer einstellbaren Drehzahl.

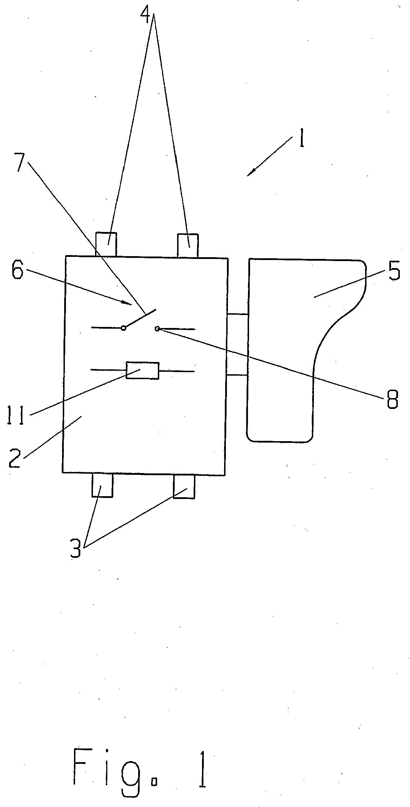

Der Schalter 1 ist in einer Ausgestaltung näher in Fig. 1 zu sehen. Bei dem in Fig. 1 lediglich schematisch gezeigten Schaltelement 6 handelt es sich um ein elektromechanisches Kontaktsystem, das einen Festkontakt 8 und einen damit zusammenwirkenden, bewegbaren Schaltkontakt 7 umfaßt. Der Schalter 1 ist somit in der Art eines elektrischen Schalters ausgebildet.

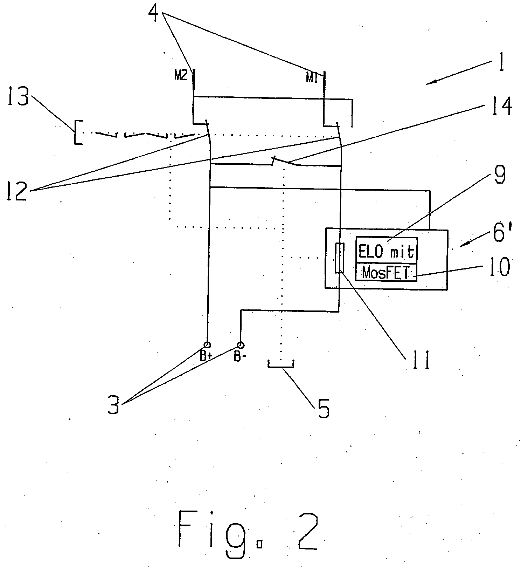

Falls gewünscht kann der Schalter 1 auch in der Art eines elektronischen Schalters ausgebildet sein. In Fig. 2 ist eine Schaltungsanordnung für eine derartige Ausgestaltung gezeigt, bei der im Gehäuse 2 ein ansteuerbares elektronisches Schaltelement 6' angeordnet ist. Das elektronische Schaltelement 6' dient wiederum zum Ein- und/oder Ausschalten der elektrischen Spannungszuführung zwischen den Eingängen 3 von der Spannungsquelle 16 und den Ausgängen 4 zum Elektromotor 17. Mittels des manuell bewegbaren Betätigungsorgans 5 wirkt der Benutzer zur schaltenden Ansteuerung des elektronischen Schaltelements 6' ein. Das elektronische Schaltelement 6' ist mit einer Elektronik 9 versehen, die einen zwischen einem sperrenden sowie einem leitenden Zustand umschaltbaren Leistungshalbleiter 10, beispielsweise einen MosFET, umfaßt.

Um im Fehlerfalle das Abschalten des Elektrowerkzeugs 15 sicherzustellen, ist dem Schaltelement 6, 6' eine Sicherung 11 in der Art einer Hochstromsicherung und/oder eine Überstromeinrichtung 11 zugeordnet, wie in Fig. 1 oder in Fig. 2 zu sehen ist. Die Hochstromsicherung 11 gemäß Fig. 1 unterbricht beim Auftreten eines Kurzschlußstroms die elektrische Spannungszuführung zum Elektromotor 17 unabhängig vom Betätigungsorgan 5. Insbesondere ist die Überstromeinrichtung 11 in der Spannungszuführung zum Elektromotor 17 angeordnet, wie in Fig. 2 gezeigt ist, derart daß im Fehlerfalle des elektronischen Schaltelements 6' die Spannungszuführung von der Überstromeinrichtung 11 unterbrochen wird. Ein solcher Fehlerfall, bei dem das Ausschalten des Elektromotors 17 mittels des Betätigungsorgan 5 nicht mehr möglich ist, kann dann auftreten, wenn der Leistungshalbleiter 10 durchlegiert ist.

Gemäß Ausbildung nach Fig. 1 besteht das Schaltelement 6 aus einem mechanischen Kontaktsystem. In einer Ausgestaltung kann die Hochstromsicherung 11 eine mechanische Zwangsöffnung umfassen, derart daß bei Auftreten des Kurzschlußstromes der Schaltkontakt 7 unabhängig vom Betätigungsorgan 5 geöffnet wird. Für eine solche Zwangsöffnung bietet sich ein Bi-Metall-Bauelement an, wobei das Bi-Metall-Bauelement vorgespannt sein kann. Bei einem hohen Kurzschlußstrom sowie der dadurch folgenden starken Erwärmung des Bi-Metall-Bauteiles erfolgt dann eine schnappende Öffnung des Schaltkontaktes 7.

In einer anderen Ausgestaltung ist die Hochstromsicherung 11 als mechanischer Kontakt in der Art eines Kurschluß-Öffners ausgebildet. Der mechanische Kontakt besitzt im "Normalbetrieb" keine Funktion und tritt lediglich im Fehlerfalle in Aktion.

Die Hochstromsicherung 11 kann auch aus einem elektrischen und/oder elektronischen Bauelement bestehen, das mittels einer zugehörigen Elektronik den Stromkreis im Fehlerfalle öffnet. Zweckmäßigerweise besteht das Bauelement aus einem in den Sperrzustand schaltbaren MOSFET.

In einer anderen Ausgestaltung besteht die Hochstromsicherung 11 aus einem metallenen, als Leiter fungierenden Element. Das Element wird infolge eines hohen Kurzschlußstromes in seiner Form derart verändert, daß das Element eine Kontaktstelle im Stromkreis öffnet. Es bietet sich an, daß das Element auf einer Leiterplatte im Gehäuse 2 des Schalters 1 aufgebracht ist. Das metallene Element kann beispielsweise aus einem Bi-Metall-Werkstoff bestehen. Es bietet sich wiederum an, daß das metallene Element unter mechanischer Spannung steht, insbesondere unter einer Biege- und/oder Verdrehspannung, wobei das Element infolge eines hohen Kurzschlußstromes partiell zerstört wird, derart daß das Element durch die freiwerdende mechanische Spannung den Stromkreis öffnet.

In nochmals einer weiteren Ausgestaltung besteht die Hochstromsicherung 11 aus einer den Kurzschlußstrom unterbrechenden Schmelzsicherung. Die Schmelzsicherung ist im und/oder am Gehäuse 2 derart zugänglich angeordnet, daß die Schmelzsicherung von außen am Gehäuse 2 ersetzt werden kann.

Die Hochstromsicherung 11 kann in nochmals einer anderen Ausgestaltung aus einem elektronischen Stromkreis zur Detektierung des Kurzschlußstroms bestehen. Dafür bietet sich eine Strommessung direkt über einen Shunt-Widerstand oder indirekt über eine Temperaturmessung mittels eines NTC-Widerstandes an. Aufgrund der Detektierung des Kurzschlußstroms wird der Stromkreis elektronisch unterbrochen, beispielsweise durch Öffnen eines Leistungshalbleiters. Weiter ist es für den Service vorteilhaft, wenn die Unterbrechung des Stromkreises nach außen hin zur Fehlerindikation erkennbar ausgeführt ist.

Wie man weiter der Fig. 2 entnimmt, besitzt der Schalter 1 einen elektrischen Umschalter 12 für die Drehrichtung des Elektromotors 17. Der Umschalter 12 ist vom Benutzer mittels eines Betätigungselements 13 bedienbar. Weiter ist mittels des Betätigungsorgans 5 ein Bremskontakt 14 zur Kurzschlußbremsung des Elektromotors 17 bedienbar, wobei der Bremskontakt 14 dem Elektromotor 17 in der Spannungszuführung parallel geschaltet ist. Der Bremskontakt 14 ist bei eingeschaltetem elektronischen Schaltelement 6' geöffnet und bei ausgeschaltetem elektronischen Schaltelement 6' geschlossen.

Die Überstromeinrichtung 11 kann als dünne Leiterbahn ausgebildet sein, wobei die Leiterbahn zweckmäßigerweise auf einer die Elektronik 9 aufnehmenden Leiterplatte angeordnet ist. Bei einem Überstrom, der beispielsweise mittels eines Kurzschlußstroms über den Bremskontakt 14 auftritt, wird die Leiterbahn durch Verdampfen zerstört, womit wiederum die Spannungszuführung zum Elektromotor 17 dauerhaft getrennt ist.

Gemäß der beschriebenen Ausführung ist die Schaltungsanordnung nach der Fig. 1 und/oder Fig. 2 im Gehäuse 2 eines Elektrowerkzeugschalters 1 angeordnet. Die Erfindung ist jedoch nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann die Erfindung nicht nur bei Elektrowerkzeugschaltern für DC- und/oder AC-Elektrowerkzeugen sowie -Elektroniken eingesetzt werden, sondern kann auch an anderen Schaltern für Elektrogeräte, beispielsweise solchen für Elektrohaushaltsgeräte, Elektrogartengeräte, Werkzeugmaschinen o. dgl., Verwendung finden.

### Bezugszeichen-Liste:

- 1:: Schalter / Elektrowerkzeugschalter
- 2:: Gehäuse
- 3:: (elektrischer) Eingang
- 4:: (elektrischer) Ausgang
- 5:: Betätigungsorgan
- 6:: Schaltunganordnung / (elektrisches) Schaltelement
- 6':: Schaltunganordnung / (elektronisches) Schaltelement
- 7:: Schaltkontakt
- 8:: Festkontakt
- 9:: Elektronik
- 10:: Leistungshalbleiter
- 11:: Sicherung / Hochstromsicherung / Überstromeinrichtung
- 12:: Umschalter
- 13:: Betätigungselement
- 14:: Bremskontakt
- 15:: Elektrowerkzeug
- 16:: Spannungsquelle
- 17:: Elektromotor
- 18:: Gehäuse (von Elektrowerkzeug)
- 19:: Werkzeugaufnahme
- 20:: Werkzeug
- 21:: Handgriff (von Elektrowerkzeug)
- 22:: Stößel

## Patentansprüche

1. Elektrowerkzeug, wie ein Akku- und/oder Netz-Elektrowerkzeug, beispielsweise Bohrmaschinen, Schleifer, Sägen, Hobel, Winkelschleifer o. dgl., mit einem Elektromotor (17), mit einem Schalter (1), wobei der Schalter (1) ein eigenes Gehäuse (2) besitzt, mit einer Schaltungsanordnung (6, 6') zum Ein- und/oder Ausschalten der elektrischen Spannungszuführung zum Elektromotor (17) im Gehäuse (2), und mit einem Betätigungsorgan (5) zur schaltenden Einwirkung auf die Schaltungsanordnung (6, 6'), wobei eine Sicherung (11) in der Art einer Hochstromsicherung angeordnet ist, derart daß beim Auftreten eines Kurzschlußstroms die elektrische Spannungszuführung zum Elektromotor (17) unabhängig vom Betätigungsorgan (5) unterbrochen wird und/oder eine Überstromeinrichtung (11) angeordnet ist, derart daß im Fehlerfalle der Schaltungsanordnung (6, 6') die elektrische Spannungszuführung zum Elektromotor (17) von der Überstromeinrichtung (11) unterbrochen wird, **dadurch gekennzeichnet, daß** die Sicherung (11) und/oder die Überstromeinrichtung (11) der Schaltungsanordnung (6, 6') dem Gehäuse (2) zugeordnet ist.

2. Elektrogerät nach Anspruch 1, **dadurch gekennzeichnet, daß** die Schaltungsanordnung (6, 6') ein Kontaktsystem mit einem Festkontakt (8) und einem damit zusammenwirkenden, bewegbaren Schaltkontakt (7) und/oder ein ansteuerbares elektronisches Schaltelement (6'), wie eine Elektronik (9) mit einem zwischen einem sperrenden sowie einem leitenden Zustand umschaltbaren Leistungshalbleiter (10), umfaßt.

3. Elektrogerät nach Anspruch 1 oder 2, **dadurch gekennzeichnet, daß** das Kontaktsystem als mechanisches Schaltelement (6) ausgebildet ist, daß vorzugsweise die Sicherung (11) eine mechanische Zwangsöffnung umfaßt, derart daß bei Auftreten des Kurzschlußstromes der Schaltkontakt (7) unabhängig vom Betätigungsorgan (5) geöffnet wird, daß weiter vorzugsweise die Zwangsöffnung als Bi-Metall-Bauelement ausgestaltet ist, und daß noch weiter vorzugsweise das Bi-Metall-Bauelement vorgespannt ist, so daß bei einem hohen Kurzschlußstrom sowie der dadurch folgenden starken Erwärmung des Bi-Metall-Bauteiles eine schnappende Öffnung des Schaltkontaktes (7) erfolgt.

4. Elektrogerät nach Anspruch 1, 2 oder 3, **dadurch gekennzeichnet, daß** die Sicherung (11) als mechanischer Kontakt in der Art eines Kurschluß-Öffners ausgebildet ist.

5. Elektrogerät nach einem der Ansprüche 1 bis 4, **dadurch gekennzeichnet, daß** die Sicherung (11) aus einem elektrischen und/oder elektronischen Bauelement besteht, das insbesondere mittels einer zugehörigen Elektronik den Stromkreis öffnet, und daß vorzugsweise das Bauelement aus einem in den Sperrzustand schaltbaren MOSFET besteht.

6. Elektrogerät nach einem der Ansprüche 1 bis 5, **dadurch gekennzeichnet, daß** die Sicherung (11) aus einem metallenen, als Leiter fungierenden Element besteht, daß vorzugsweise das Element infolge eines hohen Kurzschlußstromes in seiner Form derart verändert wird, daß das Element eine Kontaktstelle im Stromkreis öffnet, und daß weiter vorzugsweise das Element auf einer Leiterplatte aufgebracht ist.

7. Elektrogerät nach Anspruch 6, **dadurch gekennzeichnet, daß** das metallene Element aus einem Bi-Metäll-Werkstoff besteht.

8. Elektrogerät nach Anspruch 6, **dadurch gekennzeichnet, daß** das metallene Element unter mechanischer Spannung steht, insbesondere unter einer Biege- und/oder Verdrehspannung, und daß vorzugsweise das Element infolge eines hohen Kurzschlußstromes partiell zerstört wird, derart daß das Element durch die freiwerdende mechanische Spannung den Stromkreis öffnet.

9. Elektrogerät nach einem der Ansprüche 1 bis 8, **dadurch gekennzeichnet, daß** die Sicherung (11) aus einer den Kurzschlußstrom unterbrechenden Schmelzsicherung besteht.

10. Elektrogerät nach einem der Ansprüche 1 bis 9, **dadurch gekennzeichnet, daß** die Sicherung (11) aus einem elektronischen Stromkreis zur Detektierung des Kurzschlußstroms besteht, insbesondere eine Strommessung direkt über einen Shunt-Widerstand und/oder indirekt über eine Temperaturmessung mittels eines NTC-Widerstandes erfolgt, und daß vorzugsweise aufgrund der Detektierung des Kurzschlußstroms der Stromkreis elektronisch unterbrochen wird, insbesondere durch Öffnen eines Leistungshalbleiters.

11. Elektrogerät nach einem der Ansprüche 1 bis 10, **dadurch gekennzeichnet, daß** die Unterbrechung des Stromkreises nach außen hin, insbesondere für den Service, zur Fehlerindikation erkennbar ausgeführt ist.

12. Elektrogerät nach einem der Ansprüche 1 bis 11, **dadurch gekennzeichnet, daß** ein mittels des Betätigungsorgans (5) betätigbarer Bremskontakt (14) zur Kurzschlußbremsung des Elektromotors (17) dem Elektromotor (17) in der Spannungszuführung parallel geschaltet ist, wobei der Bremskontakt (14) bei eingeschaltetem elektronischen Schaltelement (6') geöffnet und bei ausgeschaltetem elektronischen Schaltelement (6') geschlossen ist.

13. Elektrogerät nach einem der Ansprüche 1 bis 12, **dadurch gekennzeichnet, daß** die Überstromeinrichtung (11) als dünne Leiterbahn, insbesondere auf einer die Elektronik (9) aufnehmenden Leiterplatte, ausgebildet ist, derart daß die Leiterbahn bei einem Überstrom, insbesondere mittels eines Kurzschlußstroms über den Bremskontakt (14), zerstört wird, womit die Spannungszuführung zum Elektromotor (17) dauerhaft getrennt ist.

## Claims

1. Electric tool, such as battery and/or AC-power tools, such as drills, sanders, saws, planes, angle grinders or the like, with an electric motor (17) with a switch (1), wherein the switch (1) has its own housing (2), with a circuit arrangement (6, 6') for switching the electric power supply to the electric motor (17) in the housing (2) on and/or off, and with an actuating member (5) having a switching effect on the circuit arrangement (6, 6'), wherein a fuse (11) is arranged in the manner of a high-current fuse so that, on the occurrence of a short-circuit current, the electrical voltage supply to the electric motor (17) is interrupted independently of the actuating member (5), and/or an over-current device (11) is so designed that, in the event of a failure of the circuit arrangement (6, 6'), the electrical voltage supply to the electric motor (17) is interrupted by the over-current device (11), **characterised in that** the fuse (11) and/or the over-current device (11) of the circuit arrangement (6, 6') is associated with the housing (2).

2. Electric device according to claim 1, **characterised in that** the circuit arrangement (6, 6') comprises a contact system with a fixed contact (8) and a movable switching contact (7) interacting with it, and/or a controllable electronic switching element (6'), such as an electronics (9) comprising a power semiconductor (10), which is switchable between a blocking and a conducting state.

3. Electric device according to claim 1 or 2, **characterised in that** the contact system is in the form of a mechanical switching element (6), wherein the fuse (11) preferably comprises a mechanical positive opening, so that, on occurrence of the short circuit current, the switching contact (7) is opened independently of the actuating member (5), wherein, further, the positive opening is in the form of a bi-metal element, and wherein further preferably, the bi-metal element is biased so that, in the event of a high short circuit current along with the subsequent strong heating of the bi-metal component, the switch contact (7) snaps open.

4. Electric device according to claim 1, 2 or 3, **characterised in that** the fuse (11) is in the form of a mechanical contact in the form of a short circuit opener.

5. Electric device according to one of the claims 1 to 4, **characterised in that** the fuse (11) comprises an electric and/or electronic component, which opens the circuit in particular by means of an associated electronics, and that the device preferably consists of a MOSFET that is switchable to the off-state.

6. Electric device according to one of the claims 1 to 5, **characterised in that** the fuse (11) consists of a metal element serving as a conductor, wherein the element is preferably so changed in its shape as a result of a high short circuit current, that the element opens a contact point in the circuit, and, wherein further, that the element is also preferably located on a circuit board.

7. Electric device according to claim 6, **characterised in that** the metal element consists of a bi-metal material.

8. Electric device according to claim 6, **characterised in that** the metal element is under mechanical stress, in particular a bending and/or torsional stress, and that, due to a high short-circuit current, the element is preferably partially destroyed in such a way that the element opens the circuit as a result of the released mechanical stress.

9. Electric device according to one of the claims 1 to 8, **characterised in that** the fuse (11) comprises a melting fuse interrupting the short circuit current.

10. Electric device according to one of the claims 1 to 9, **characterised in that** the fuse (11) consists of an electronic circuit to detect the short-circuit current, in particular a current measurement, directly via a shunt resistor and/or indirectly via a temperature measurement by means of an NTC-resistance, and wherein, due to the detection of the short circuit current, the current circuit is preferably interrupted electronically, in particular by opening a power semiconductor.

11. Electric device according to one of the claims 1 to 10, **characterised in that** the interruption of the circuit is made recognizable by error indication to the outside, in particular to the service.

12. Electric device according to one of the claims 1 to 11, **characterised in that** the brake contact (14), which is a actuated by means of the actuating member (5) for short-circuit braking of the electric motor (17), is switched in parallel to the electric motor (17) in the voltage supply, wherein the brake contact (14) is opened when the electronic switching element (6') is switched on, and closed when the electronic switching element (6) is switched off.

13. Electric device according to one of the claims 1 to 12, **characterised in that** the over current device (11) in the form of a thin conductive track is so formed, in particular on a circuit board receiving the electronics (9), that the conductive track is destroyed by an over current, in particular by means of a short-circuit current via the brake contact (14), wherein the supply voltage to the electric motor (17) is permanently interrupted.

## Revendications

1. Outil électrique, comme un outil électrique à accumulateur et/ou sur secteur, par exemple foreuses, meuleuses, scies, rabots, meuleuses d'angle ou similaires, ayant un moteur électrique (17), ayant un interrupteur (1), l'interrupteur (1) possédant un logement propre (2), ayant un agencement de commutation (6, 6') pour activer et/ou arrêter l'amenée de tension électrique vers le moteur électrique (17) dans le logement (2), et ayant un organe d'actionnement (5) pour exercer l'action de commutation sur l'agencement de commutation (6, 6'), un coupe-circuit (11) étant prévu sous la forme d'un coupe-circuit haute tension de telle sorte qu'en cas de survenue d'un courant de court-circuit, l'amenée de tension électrique vers le moteur électrique (17) est interrompue indépendamment de l'organe d'actionnement (5) et/ou un dispositif de surintensité (11) étant prévu de telle sorte qu'en cas de défaillance de l'agencement de commutation (6, 6'), l'amenée de tension électrique vers le moteur électrique (17) est interrompue par le dispositif de surintensité (11), **caractérisé en ce que** le coupe-circuit (11) et/ou le dispositif de surintensité (11) de l'agencement de commutation (6, 6') est ou sont adjoints au logement (2).

2. Outil électrique selon la revendication 1, **caractérisé en ce que** l'agencement de commutation (6, 6') comprend un système de contact avec un contact fixe (8) et un contact de commutation mobile coopérant avec celui-ci (7) et/ou un élément de commutation électronique pouvant être commandé (6'), comme un système électronique (9) avec un semi-conducteur de puissance (10) pouvant être commuté entre une position de blocage et une position de conductivité.

3. Outil électrique selon la revendication 1 ou 2, **caractérisé en ce que** le système de contact est réalisé en tant qu'élément de commutation mécanique (6), **en ce que** de façon préférée, le coupe-circuit (11) comprend une ouverture forcée mécanique, de telle sorte que lors de la survenue du courant de court-circuit, le contact de commutation (7) est ouvert indépendamment de l'organe d'actionnement (5), **en ce que** de façon plus préférée, l'ouverture forcée est conçue en tant que composant bi-métal, et **en ce que** de façon encore plus préférée, le composant bi-métal est précontraint, de telle sorte que lors d'un courant de court-circuit élevé ainsi que de l'échauffement substantiel consécutif du composant bi-métal, il se produit une ouverture par encliquetage du contact de commutation (7).

4. Outil électrique selon la revendication 1, 2 ou 3, **caractérisé en ce que** le coupe-circuit (11) est réalisé en tant que contact mécanique sous la forme d'un contact à ouverture de court-circuit.

5. Outil électrique selon l'une des revendications 1 à 4, **caractérisé en ce que** le coupe-circuit (11) est constitué d'un composant électrique et/ou électronique, qui ouvre en particulier le circuit de courant au moyen d'un système électronique qui y est adjoint, et **en ce que** de préférence, le composant est constitué d'un MOSFET pouvant être commuté dans la position de blocage.

6. Outil électrique selon l'une des revendications 1 à 5, **caractérisé en ce que** le coupe-circuit (11) est constitué d'un élément métallique faisant fonction de conducteur, **en ce que** de façon préférée, l'élément est modifié dans sa forme à la suite d'un courant de court-circuit élevé de telle sorte que l'élément ouvre un point de contact dans le circuit de courant, et **en ce que** de façon plus préférée, l'élément est installé sur un circuit imprimé.

7. Outil électrique selon la revendication 6, **caractérisé en ce que** l'élément métallique est constitué d'un matériau bi-métal.

8. Outil électrique selon la revendication 6, **caractérisé en ce que** l'élément métallique est soumis à une tension mécanique, en particulier une contrainte de flexion et/ou de torsion, et **en ce que** de préférence, l'élément est partiellement détruit à la suite d'un courant de court-circuit élevé, de telle sorte que l'élément ouvre le circuit de courant du fait de la tension mécanique relâchée.

9. Outil électrique selon l'une des revendications 1 à 8, **caractérisé en ce que** le coupe-circuit (11) est constitué d'un fusible interrompant le courant de court-circuit.

10. Outil électrique selon l'une des revendications 1 à 9, **caractérisé en ce que** le coupe-circuit (11) est constitué d'un circuit de courant électronique permettant de détecter le courant de court-circuit, **en ce qu'**en particulier, une mesure du courant est réalisée directement au moyen d'une résistance shunt et/ou indirectement au moyen d'une mesure de la température à l'aide d'une résistance NTC, et **en ce que** de préférence, le circuit de courant est interrompu électroniquement sur la base de la détection du courant de court-circuit, en particulier par l'ouverture d'un semi-conducteur de puissance.

11. Outil électrique selon l'une des revendications 1 à 10, **caractérisé en ce que** l'interruption du circuit de courant est exécutée de façon visible en direction de l'extérieur, en particulier pour la maintenance, de façon à indiquer la défaillance.

12. Outil électrique selon l'une des revendications 1 à 11, **caractérisé en ce qu'**un contact de frein (14) pouvant être actionné au moyen de l'organe d'actionnement (5) est monté en parallèle au moteur électrique (17) dans l'amenée de tension en vue d'un freinage à court-circuit du moteur électrique (17), le contact de frein (14) étant ouvert lorsque l'élément de commutation électronique (6') est activé et fermé lorsque l'élément de commutation électronique (6') est arrêté.

13. Outil électrique selon l'une des revendications 1 à 12, **caractérisé en ce que** le dispositif de surintensité (11) est réalisé en tant que piste conductrice mince, en particulier sur un circuit imprimé supportant le système électronique (9), de telle sorte que lors d'une surintensité, la piste conductrice est détruite, en particulier au moyen d'un courant de court-circuit par le biais du contact de frein (14), ce par quoi l'amenée de tension est définitivement coupée du moteur électrique (17).
